# EUROPEAN PATENT APPLICATION

(11) **EP 4 654 556 A1**
(43) Date of publication of application: **26.11.2025**
(21) Application number: 25178665.3
(22) Date of filing: 23.05.2025
(51) Int. Cl.: H04L 67/02, H04L 67/141, H04L 67/2871, H04L 67/56, H04L 67/145

(54) **SYSTEMS AND METHODS FOR SESSION MANAGEMENT BETWEEN A MICROSERVICE AND AN APPLICATION SERVER**

(30) Priority: 24.05.2024 IN 202411040428
(71) Applicant: General Electric Company, Cincinnati, Ohio 45215 (US)
(72) Inventor: MATHUR, Yashraj Swarup, 560066 Bengaluru (IN); FAIT, Kevin R, Cincinnati, 45202 (US)
(74) Representative: Openshaw & Co.

(57) **Abstract**

An information processing method, comprising: receiving, by a smart connection pool manager (SCPM) (20), a request from a microservice (12) for a web services connection to communicate with an application server (14); requesting, by the SCPM (20), a creation of a web services session from an application server (14); receiving, by the SCPM (20), a session identification from the application server (14); and sending the session identification to the microservice (12) in response to the request for a web services connection.

## Description

### FIELD

The present disclosure relates to apparatus and methods related to client-server session management between microservices and application servers.

### BACKGROUND

In a client-server architecture, messages can be exchanged between client and server using a request and response pattern. To ensure security, credentials can be passed to authenticate the client for communication with the server. In an environment where one or more microservices act as a client and an application server acts as server, authenticating credentials for the one or more microservices at the server can require a not insignificant computational expense. Furthermore, the one or more services may use different instances of the same session. Improvements to the authentication and communication between client(s) and server would be useful in the art.

### BRIEF DESCRIPTION OF THE DRAWINGS

A full and enabling disclosure of the presently described technology, including the best mode thereof, directed to one of ordinary skill in the art, is set forth in the specification, which makes reference to the appended figures, in which:
FIG. 1 is depiction of a prior art information system.
FIG. 2 is an embodiment of an information system in accordance with another exemplary embodiment of the present disclosure.
FIG. 3 is an embodiment of an information system in accordance with an exemplary embodiment of the present disclosure.
FIG. 4 is an embodiment of an information system in accordance with another exemplary embodiment of the present disclosure.
FIG. 5A is an embodiment of a flow diagram of an information system in accordance with another exemplary embodiment of the present disclosure.
FIG. 5B is an embodiment of a flow diagram of an information system in accordance with another exemplary embodiment of the present disclosure.
FIG. 6 is an embodiment of an information system in accordance with another exemplary embodiment of the present disclosure.
FIG. 7A is an embodiment of a flow diagram of an information system in accordance with another exemplary embodiment of the present disclosure.
FIG. 7B is an embodiment of a flow diagram of an information system in accordance with another exemplary embodiment of the present disclosure.
FIG. 8 is an embodiment of a computing device in accordance with another exemplary embodiment of the present disclosure.

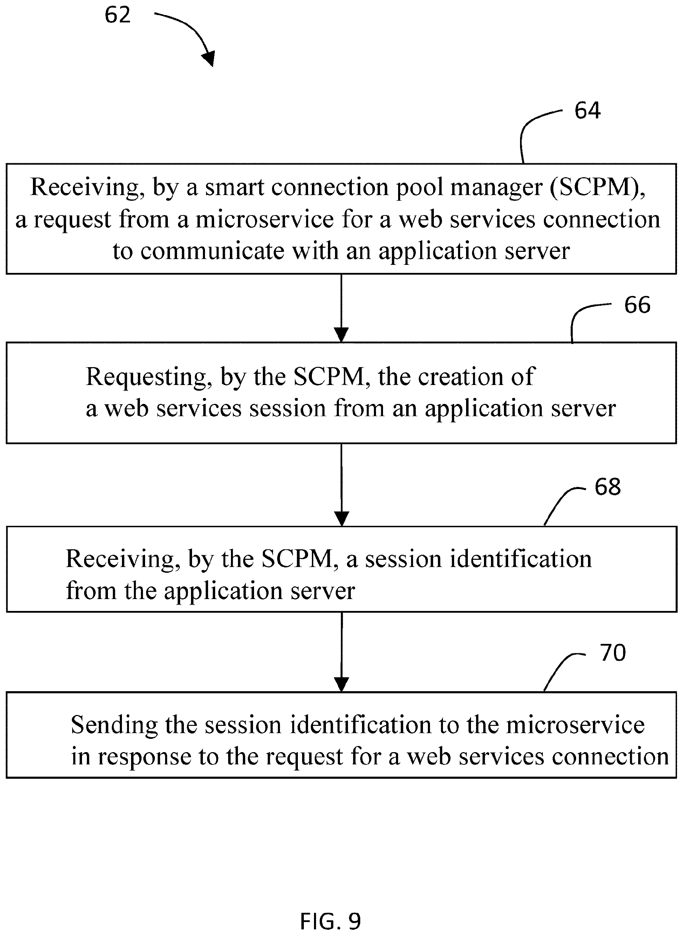

FIG. 9 is an embodiment of a method of operating an information system in accordance with another exemplary embodiment of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first", "second", and "third" may be used interchangeably to distinguish one component from another and are not intended to signify location or importance of the individual components.

The present disclosure is generally related to systems and methods for requesting service and responding with information between components of an information system that includes a smart connection pool manager (SCPM), one or more microservices, and an application server. The SCPM authenticates access of the microservice to the application server and provides session identification, created by the application server when establishing a web services session ("session" for ease of convenience herein), to the microservice for subsequent communication between the microservice and the application service of web services. The microservice can be triggered to initiate a request using web services session by user action, or can be programmatically triggered to initiate the request for web services session through any number of mechanisms such as, but not limited to, an event-based system. When a microservice is triggered to request a web service from the application server (whether through user action or event-based program), the microservice sends a request for a web services session to the SCPM. The SCPM authenticates credentials from the microservice and, upon authentication, sends a request using web services to the application server. The application server creates a session and responds to the SCPM with a session identification, also referred to herein as "session id," to the SCPM. The SCPM, after receiving the session id from the application server, sends the session id to the microservice. The microservice uses the session id when requesting a web service from the application server. In some embodiments, when the microservice has concluded the need for web services based requests and responses, the microservice can send a termination to the SCPM. If another microservice is also in need of web services based request and responses, the SCPM can send the session id to the other microservice.

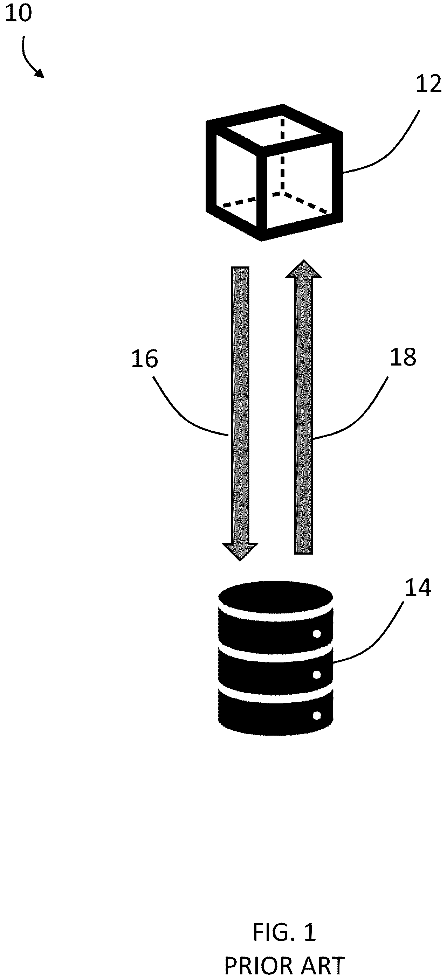

Referring now to the drawings, wherein identical numerals indicate the same elements throughout the figures, FIG. 1 is a schematic depiction of an information system 10 of the prior art which includes a microservice 12, and an application server 14. The microservice 12 sends a request 16 using web services directly to an application server 14, in which the request includes credentials associated with the microservice 12. The application server 14 authenticates the credentials, and then creates a session and sends a response 18 with a session id back to the microservice 12 if the credentials are authenticated. In some embodiments, the response 18 may also include data relevant to the request 16. The credentials provided by the microservice 12 can include a login identification and password. The microservice 12 uses the session id within subsequent requests 16 when interacting with and asking the application server 14 to provide web services.

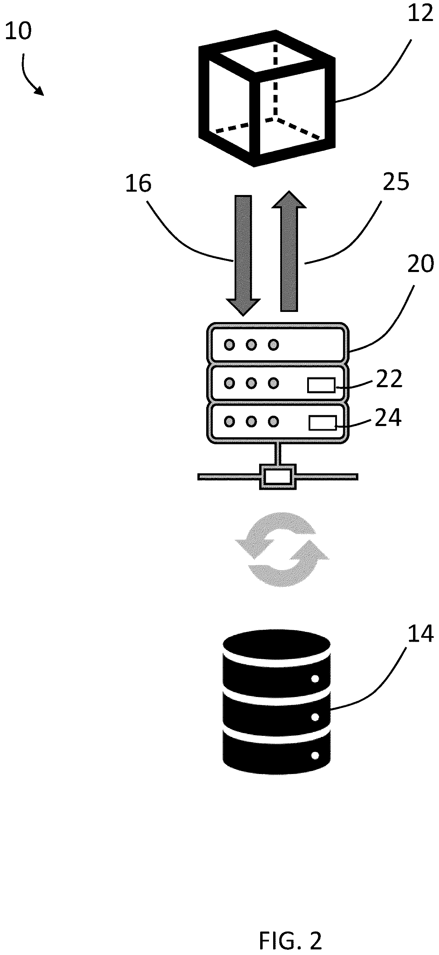

Turning now to FIG. 2, an embodiment of an information system 10 of the present disclosure includes the microservice 12 and application server 14, along with a smart connection pool manager (SCPM) 20 used to facilitate communication between the microservice 12 and application server 14. As used herein, microservices is a style of application architecture that structures an application as a collection of independent services, where each of the independent services can be referred to as a microservice. Examples of independent services include requesting a bill of material for a specific article of manufacture (e.g., a turbine blade, a fastener, a hose, etc.), retrieval of work instructions for making a manufacturing assembly (e.g., work instructions on the order of operation of insertion of a blade into a disk and fastening the blade to a disk), requesting drawing details related to a drawing in a database (e.g., time of creation, last edited date, etc.), request to send a drawing to an external system (e.g., request to transfer a drawing). The microservices can be configured to communicate through an application program interface (API). For example, in embodiments, the microservices can be configured to communicate with a central component such as an orchestrator and/or one or more other microservices. Further still, in some embodiments the API used to communicate with a microservice can be a RESTful API where, as is known, REST refers to REpresentational State Transfer. Microservices architecture can be contrasted with monolithic architectures where all processes of an application are coupled to run as a single service. In a monolithic architecture, if one process of the application experiences a high demand, improving the performance of the application requires scaling the entire application. In a microservices architecture, only the microservice need be scaled.

The microservice 12 sends a request 16 using web services to the SCPM 20. It is contemplated that the webservices requested by the microservice 12 can take a variety of forms, including those forms that are configured to use standardized web protocols such as hypertext transfer protocol (HTTP) or hypertext transfer protocol secure (HTTPS). A variety of components can be used in a typical webservice, including simple object access protocol (SOAP); universal description, discovery, and integration (UDDI); and web services description language (WSDL), to set forth just a few non-limiting examples. Data can be exchanged through the API in a variety of formats, including, but not limited to, extensible markup language (XML) or javascript object notation (JSON).

The request 16 for webservices from the microservice 12 can include one or more credentials used for authentication by the SCPM 20. Once authenticated, the SCPM 20 sends a request to the application server 14 that can also include the same or alternative credentials used by the microservice 12 when communicating with the SCPM 20. Once the one or more credentials are authenticated at both the SCPM 20 and application server 14, the application server 14 can create a session and send a response back to the SCPM 20 with a session identifier (id). As will be appreciated, the session can be created by undertaking any necessary actions such as, but not limited to, loading libraries and allocating memory in preparation for receiving a web services request from the microservice 12. When the SCPM 20 receives the session id in the response from the application server 14, the SCPM 20 can send a response back to the microservice 12 with the session id. In some forms, the response from the SCPM 20 can also include data in addition to the session id. Upon receiving the session id in the response from the SCPM 20, the microservice 12 can send a request using web services to the application server 14 which can include a request for data.

Connections established via API between any of microservice 12, SCPM 20, and the application server 14 can be characterized as zero trust in some embodiments herein. Other embodiments, however, may have one or more connections between any of microservice 12, SCPM 20, and the application server 14 that operate on the basis of implicit trust. In one form, the SCPM 20 can include a whitelist 22 of identifications of permitted microservices. When the microservice 12 sends a request 16 to the SCPM 20, the SCPM 20 can compare an identification associated with the microservice 12 embedded within the request 16 (e.g., a client credential, a return IP address, a secured sockets layer (SSL) certificate, etc.) against a whitelist 22 of approved microservices (e.g., a list of approved microservice addresses). If the identification associated with the microservice 12 matches the whitelist, then the SCPM 20 will have authenticated the microservice 12 and thereafter operate upon the request 16 and communicate with the application server 14. The SCPM 20 can also host credentials 24 such as login id and password, for use in logging into the application server 14. For example, the SCPM 20, having authenticated the microservice 12 as discussed above, can use the credentials 24 to log in to the application server 14 to authorize, at the application server 14, a session for communicating with the SCPM 20 and microservice 12. In lieu of the SCPM 20 authenticating the credentials of the microservice 12 and then logging in to the application server 14, the SCPM 20 can be in an implicit trust relationship with the application server 14 such that, after the SCPM 20 authenticates the microservice 12 based upon the credentials sent in the request 16, the application server 14 sends a response 25 to any request (e.g., a login request) from a trusted SCPM 20.

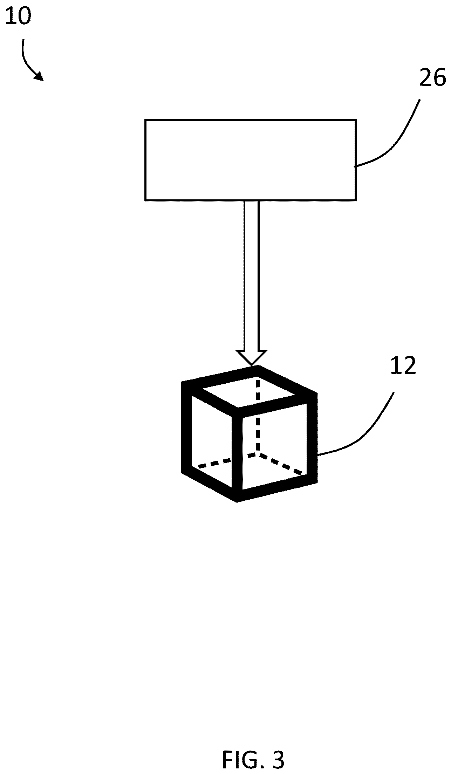

Turning now to FIG. 3, in the present disclosure, the microservice 12 can be triggered for execution through any number of actors 26, whether real or virtual. To set forth just a few nonlimiting examples, the microservice 12 can be triggered for execution by a user 26 that issues a command, via a suitable user interface, for execution of an application that uses the microservice 12. In another example, the microservice 12 can be triggered for execution by being called upon by another microservice 12 or an orchestrator, collectively and/or alternatively referred to as an actor 26. In some forms, the microservice 12 is programmatically triggered by an event-based condition, also referred to herein for ease of convenience as an actor 26. For example, an orchestrator can be configured to trigger the microservice 12 if the orchestrator determines that a programmed conditional has been satisfied. Programmed conditionals can be calendar based, user action based, etc., to set forth just two non-limiting embodiments. One example of a programmed conditional determined by an actor 26 such as an orchestrator: when a digital drawing file is issued by a drawing authority for subsequent reference by one or more consumers of the digital drawing file, the orchestrator, upon determining that a digital drawing file is being issued, can trigger the microservice 12. In this example, a user may load a digital drawing file to a server in a location that is monitored by the orchestrator. When the orchestrator determines that a digital drawing file is present in the location on the server, a programmed conditional in the orchestrator can trigger the microservice 12 to request a web service using the procedure described herein (e.g., in one form, requesting a web service session to the SCPM 20, receiving a session id from the SCPM 20, and then requesting a web service from the application server 14).

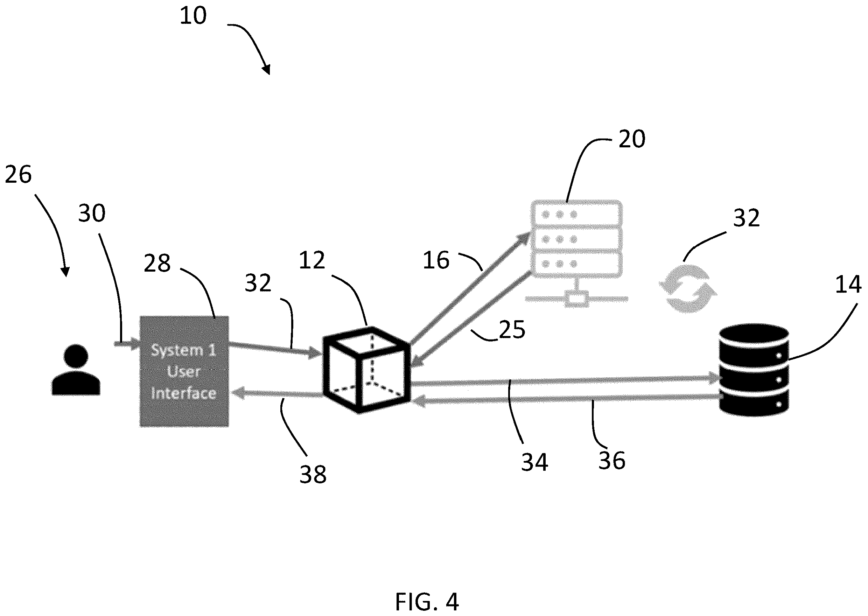

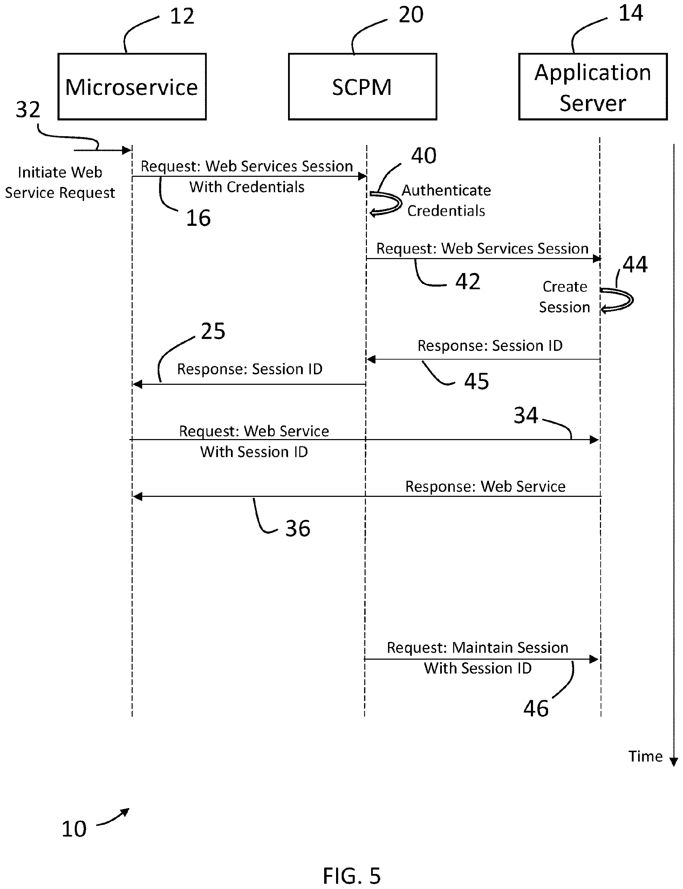

FIG. 4 depicts a request and response communication of the embodiment depicted in FIG. 2 in which the microservice is triggered by a user 26 operating a user interface 28. The user 26 is depicted as entering an action 30 that is received via the user interface 28. The user interface 28 can take a variety of forms including a keyboard and display, touch screen, smart phone, etc., which can be used to record the user action 30. User actions 30 can take a variety of forms including keystrokes on a keyboard, movements of a computer mouse, camera button, physical movement detected by a camera, etc. The user interface 28 can detect the user action 30 and thereafter send a trigger 32 (e.g., the trigger can be a hardware excitation detected by the microservice, it can be sent as a request using an API as described above, etc.) to the microservice 12 to initiate a request using web services. The microservice 12, upon receiving the trigger 32 from the user interface 28, can initiate the request 16 with the SCPM 20. The SCPM 20 authenticates the microservice 12 and then communicates with the application server 14, shown generally as arrows 32, for the creation of a session in preparation for further web services request. The arrows 32 represent the requests and responses between the SCPM 20 and application server 14, further details of which are described below in FIGS. 5A and 5B. When a session id is returned to the microservices 12 from the SCPM 20 as response 25, the microservices 12 can thereafter send a request 34 using web services to the application server 14, where the request 34 will include the session id. In some forms, as suggested above, the response 25 may additionally include data. To set forth one example of the request 34, the request 34 can include a request for data from the application server 14 to the extent that the original request 16 did or did not include a request for data. Upon receiving the request 34 with session id, the application server 14 can send a response 36 back to the microservice 12 which includes the session id and the requested data. The microservice 12 can then transmit the data 38 from the response 36 back to the user interface 28 whereupon it can be acted upon (e.g., displayed, stored as data for other uses, etc.). For example, if the microservice 12 is requesting a bill of material from the application server 14, the data 38 related to the bill of material can be transmitted and displayed on the user interface 28. In another example, if the microservice 12 is requesting that a drawing be exported from a drawing database to the user, the drawing can be packaged and emailed to be viewed by the user 26 at the user interface 28.

FIG. 5A depicts one embodiment of a simplified schematic flow diagram related to the embodiments depicted in FIGS. 2 and 4. Specifically, FIG. 5A depicts an embodiment of a flow of actions as time progresses from top to bottom in the figure. As above, the microservice can be triggered by a user 26 operating a user interface 28. The user interface 28 can detect the user action 30 and thereafter send a trigger 32 (e.g., the trigger can be a hardware excitation detected by the microservice, it can be sent as a request using an API as described above, etc.) to the microservice 12 to initiate a request using web services. The microservice 12, upon receiving the trigger 32 from the user interface 28, can initiate the request 16 with the SCPM 20. It will be appreciated that although some of the description herein suggests that the trigger 32 used to initiate the microservice 12 is itself initiated from the user interface, it will be appreciated that initiation of the microservice 12 can be through other mechanisms. For example, a microservice can be a "chron job" that is scheduled to occur at certain times where such triggering mechanism, although technically created by a user in a long distant past, is nevertheless triggered by satisfying a time condition. The trigger 32 can also be initiated by another component of the information system.

The SCPM 20 authenticates at flow step 40 (discussed further above) the microservice 12 and then communicates with the application server 14 via request 42 for the creation of a session in preparation for further web services request. The request 42 can include a credential associated with the request for web services received by the SCPM 20 from the microservice (discussed further above). The application server 14, upon receiving the request 42 and authenticating the credential sent with the request 42, can initiate the creation at flow step 44 of a session such as, but not limited to, allocating memory and loading libraries. The application server 14 will also generate the session id. After creation of the session id, the application server 14 can send a response 45 to the SCPM 20 with the application id. Upon receiving the session id from the application server 14, the SCPM 20 can send the response 25 to the microservices 12. When the session id is returned to the microservice 12 from the SCPM 20 as response 25, the microservices 12 can thereafter send a request 34 using web services to the application server 14, where the request 34 will include the session id. In some forms, as suggested above, the response 25 may additionally include data. To set forth one example of the request 34, the request 34 can include a request for data from the application server 14 to the extent that the original request 16 did or did not include a request for data. Upon receiving the request 34 with session id, the application server 14 can send a response 36 back to the microservice 12 which includes the session id and the requested data.

In some embodiments, the SCPM 20 can be used to maintain a session hosted on the application service 14 in an active state to prevent a timeout and premature termination of the session. In such embodiments, the SCPM 20 can send a request 46 for the purpose of maintaining the session with the application server 14. The SCPM 20 can retain the session id that was received in response 45 from the application server 14 and sent in response 25 to the microservice 12. The request 46 can include the session id. The request 46 can include any variety of command/query/post/etc. useful to maintain the session without disturbing the use of the session between the microservice 12 and application server 14. In some embodiments, the SCPM 20 may monitor network traffic and, when needed to maintain the session, send the request 46 for that purpose if a request 34 has not been detected within a preset time interval. The request 46 can, therefore, be asynchronous.

FIG. 5B depicts another embodiment of a simplified schematic flow diagram related to the embodiments depicted in FIGS. 2 and 4. FIG. 5B depicts an embodiment of a flow of actions as time progresses from top to bottom in the figure. FIG. 5B differs from FIG. 5A in that the microservices 12 take the form of microservices related to a change management system (referred to in the figure using reference numeral 12A) in the top portion of the figure, and the microservices 12 take the form of microservices related to a manufacturing management system (referred to in the figure using reference numeral 12B) in the lower portion of the figure. It is contemplated that the change management system 12A can represent an application having one or more microservices 12 that are individually configured to request one or more web services from the application server 14. The change management system 12 can represent a system in which the user 26, through the user action 30, requests information related to a part of an assembly. The change management system 12A is configured to communicate, through the SCPM 20, to a Product Lifecycle Management (PLM) system (referred to in the figure using reference numeral 14A) configured to manage a product and its associated data through one or more stages of the product lifecycle. It is contemplated that the PLM system 14A operates as the application server 14 and is configured to respond to requests from the change management system 12A with appropriate web services. In one embodiment, the PLM system 14A is in the form of Teamcenter, but other PLM systems are also contemplated.

As above, the microservices 12 associated with the change management system 12A can be triggered by a user 26 operating a user interface 28. The user interface 28 can detect the user action 30 and thereafter send a trigger 32 (e.g., the trigger can be a hardware excitation detected by the microservice, it can be sent as a request using an API as described above, etc.) to the microservice 12 associated with the change management system 12A to initiate a request using web services. The microservice 12 associated with the change management system 12A, upon receiving the trigger 32 from the user interface 28, can initiate the request 16 with the SCPM 20. The SCPM 20 authenticates at flow step 40 (discussed further above) the microservice 12 associated with the change management system 12A and then communicates with the PLM system 14A via request 42 for the creation of a session in preparation for further web services request. The request 42 can include a credential associated with the request for web services received by the SCPM 20 from the microservice (discussed further above). The PLM system 14A, upon receiving the request 42 and authenticating the credential sent with the request 42, can initiate the creation at flow step 44 of a session such as, but not limited to, allocating memory and loading libraries. The PLM system 14A will also generate the session id. After creation of the session id, the PLM system 14A can send a response 45 to the SCPM 20 with the application id. Upon receiving the session id from the PLM system 14A, the SCPM 20 can send the response 25 to the microservices 12 associated with the change management system 12A. When the session id is returned to the microservice 12 associated with the change management system 12A from the SCPM 20 as response 25, the microservices 12 associated with the change management system 12A can thereafter send a request 34 using web services to the PLM system 14A, where the request 34 will include the session id. In some forms, as suggested above, the response 25 may additionally include data. To set forth one example of the request 34, the request 34 can include a request for data from the PLM system 14A to the extent that the original request 16 did or did not include a request for data. Upon receiving the request 34 with session id, the PLM system 14A can send a response 36 back to the microservice 12 which includes the session id and the requested data.

FIG. 5B also differs from FIG. 5A in that the microservice 12 associated with the change management system 12A sends a request 50 to the SCPM 20 to terminate the session with the change management system so that the session can be freed up for use by other microservices 12. The manufacturing management system 12B, upon the session being freed up from use by the change management system 12A, can then make use of the session id and request web services. The manufacturing management system 12B can represent an application having one or more microservices 12 that are individually configured to request one or more web services from the application server 14. The manufacturing management system 12B can represent a system in which the user 26, through the user action 30, requests information related to retrieval of work instructions which can relate to manufacturing work instructions such as an order of assembly of multiple components. The manufacturing management system 12B is configured to communicate, through the SCPM 20, to a Product Lifecycle Management (PLM) system to retrieve the manufacturing work instructions.

The microservices associated with the manufacturing management system 12B can be triggered by a user 26 operating a user interface 28. The user interface 28 can detect the user action 30 and thereafter send a trigger 32 (e.g., the trigger can be a hardware excitation detected by the microservice, it can be sent as a request using an API as described above, etc.) to the microservice 12 associated with the manufacturing management system 12B to initiate a request using web services. The microservice 12 associated with the manufacturing management system 12B, upon receiving the trigger 32 from the user interface 28, can initiate the request 16A with the SCPM 20. The SCPM 20 authenticates at flow step 40A the microservice 12 associated with the manufacturing management system 12B and then the session id in response 25A. When the session id is returned to the microservice 12 now associated with the manufacturing management system 12B, the microservices 12 associated with the manufacturing management system 12B can thereafter send a request 34A using web services to the PLM system 14A, where the request 34A will include the session id. In some forms, as suggested above, the response 25A may additionally include data. To set forth one example of the request 34A, the request 34A can include a request for data from the PLM system 14A to the extent that the original request 16A did or did not include a request for data. Upon receiving the request 34A with session id, the PLM system 14A can send a response 36A back to the microservice 12 which includes the session id and the requested data.

In some embodiments, the SCPM 20 can be used to maintain a session hosted on the PLM system 14A in an active state to prevent a timeout and premature termination of the session. In such embodiments, the SCPM 20 can send a request 46 (illustrated in FIG. 5A) for the purpose of maintaining the session with the manufacturing management system 12B. The SCPM 20 can retain the session id that was received in response 45 from the manufacturing management system 12B and sent in response 25 or response 25A to the microservice 12. The request 46 (illustrated in FIG. 5A) can include the session id. The request 46 (illustrated in FIG. 5A) can include any variety of command/query/post/etc. useful to maintain the session without disturbing the use of the session between the microservice 12 and the PLM system 14A. In some embodiments, the SCPM 20 may monitor network traffic and, when needed to maintain the session, send the request 46 (illustrated in FIG. 5A) for that purpose if a request 34 or request 34A has not been detected within a preset time interval. The request 46 or request 46A can, therefore, be asynchronous.

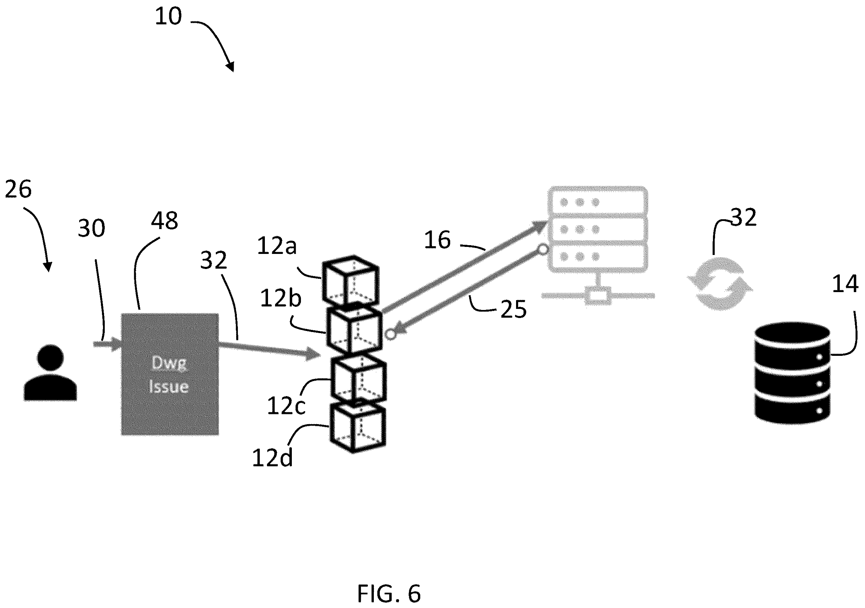

FIG. 6 depicts a request and response communication of an embodiment related to FIG. 2 in which the microservice is triggered by an event 48. In the example embodiment, the user 26 is depicted as entering an action 30 that is interpreted by the information system 10, and in some forms interpreted by an orchestrator, as related to an event. The information system 10, upon evaluating and determining the event condition is satisfied (e.g., evaluating the event against a programmatic conditional), thereafter send a trigger 32 to a plurality of microservices 12a-12d to initiate a request using web services. The plurality of microservices 12a-12d can send requests for web services to the SCPM 20. The requests from each of the separate microservices 12a-12d can be concurrent, but in some forms may occur at different instances. FIG. 6 depicts a request 16 and response 25 related to microservice 12b, but it will be appreciated that the SCPM 20 will communicate with the other microservices 12a, 12c, and 12d as described further herein.

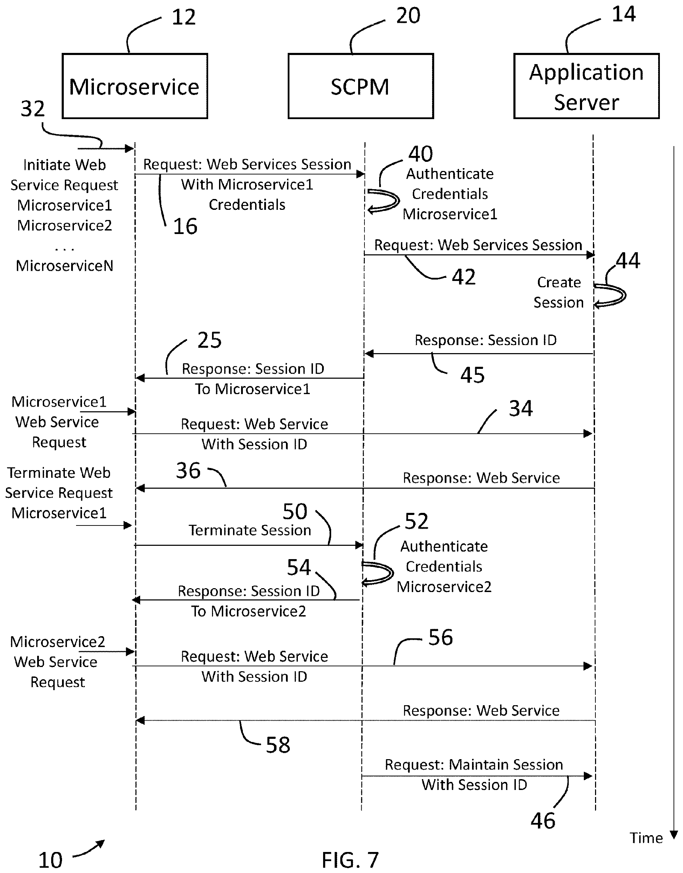

In the depiction of FIG. 6, the microservice 12b, upon receiving the trigger 32 from the user interface 28, can initiate the request 16 with the SCPM 20. The SCPM 20 authenticates the microservice 12b and then communicates with the application server 14, shown generally as arrows 32, for the creation of a session in preparation for further web services request. The arrows 32 represent the requests and responses between the SCPM 20 and application server 14, further details of which are described below in FIGS. 7A and 7B. When a session id is returned to the microservices 12b from the SCPM 20 as response 25, the microservices 12b can thereafter send a request 34 using web services to the application server 14, where the request 34 will include the session id. In some forms, as suggested above, the response 25 may additionally include data. To set forth one example of the request 34, the request 34 can include a request for data from the application server 14 to the extent that the original request 16 did or did not include a request for data. Upon receiving the request 34 with session id, the application server 14 can send a response 36 back to the microservice 12b which includes the session id and the requested data. The microservice 12b can then transmit the data 38 from the response 36 back to the user interface 28 whereupon it can be acted upon (e.g., displayed, stored as data for other uses, etc.).

FIG. 7A depicts a simplified schematic flow diagram related to the embodiments depicted in FIGS. 2 and 6 and which depicts and embodiment of a flow of actions as time progresses from top to bottom in the figure. Although FIG. 6 depicted request 16 and response 25 related only to microservice 12b, FIG. 7A depicts a flow diagram as it relates to different microservices that are incrementally labelled as microservice1 to microserviceN, with N being the number of microservices capable of using a common session on the application server 14. FIG. 7A is, therefore, a more generalized version of the embodiment depicted in FIG. 6, since the present disclosure is applicable to any number of microservices 12 requesting use of application service 14 via SCPM 20. The description of FIG. 7A will therefore begin at the trigger 32 which depicts a trigger 32 representative of all microservices 12. It will be appreciated, however, that some embodiments may include receiving a trigger 32 at different times for different microservices 12. FIG. 7A, in this regard, is a narrower depiction of possible variation of the time of arrival of the trigger 32. As suggested elsewhere in the present disclosure, the information system 10, such as via an orchestrator, may trigger each of the microservices at different times based upon different criteria.

Microservice1 12, upon receiving the trigger 32 from the user interface 28, can initiate the request 16 with the SCPM 20. The SCPM 20 authenticates at flow step 40 (discussed further above) the microservice1 12 and then communicates with the application server 14 via request 42 for the creation of a session in preparation for further web services request. The request 42 can include a credential associated with the request for web services received by the SCPM 20 from the microservice (discussed further above). The application server 14, upon receiving the request 42 and authenticating the credential sent with the request 42, can initiate the creation at flow step 44 of a session such as, but not limited to, allocating memory and loading libraries. The application server 14 will also generate the session id. After creation of the session id, the application server 14 can send a response 45 to the SCPM 20 with the application id. Upon receiving the session id from the application server 14, the SCPM 20 can send the response 25 to the microservice1 12. When the session id is returned to the microservice1 12 from the SCPM 20 as response 25, the microservice1 12 can thereafter send a request 34 using web services to the application server 14, where the request 34 will include the session id. In some forms, as suggested above, the response 25 may additionally include data.

To set forth one example of the request 34, the request 34 can include a request for data from the application server 14 to the extent that the original request 16 did or did not include a request for data. It is contemplated that the microservice may request any type data such as data related to information requests (e.g., data that includes specific drawing details useful to retrieve a drawing from a database), data related to exportation of drawings, etc. FIGS. 5B and 7B provide further examples of data that can be requested by the microservice 12 from the application server 14. Upon receiving the request 34 with session id, the application server 14 can send a response 36 back to the microservice1 12 which includes the session id and the requested data. The response 36 may be the data microservice 12 requested (for example, Part Information, Manufacturing Work Instructions, or the like).

When microservice1 12 has determined it no longer requires use of the session at the application server 14, the microservice1 12 can send a request 50 to terminate the session to the SCPM 20. The microservice 12 (e.g.,, any microservice 12 described herein) can determine that it no longer requires use of the session when it has fulfilled the conditions that gave rise to the microservice 12 upon being triggered. For example, the microservice 12 may be configured to send a single request for data from the application server 14. When the microservice 12 receives the response from the application server 14, it may then free up the session so that the session can be used by another microservice 12. The SCPM 20, upon receiving the request 50 to terminate the session from microservice1 12, can thereafter authenticate, at flow step 52, the credentials of microservice2 12 prior to sending a response 54 to microservice2 12 with the session id. Although FIG. 7A depicts the SCPM 20 authenticating credentials for microservice2 12 after the request 50 to terminate the session for microservice1 12, it will be appreciated that the SCPM 20 may authenticate microservice2 12 at other times. In fact, the SCPM 20 can authenticate any of microservices1 - microservices N at any time in the flow diagram. After microservice2 12 receives the session id in the response 54 from SCPM 20, microservice2 12 sends request 56 to the application server 14 with the session id. The application server 14, upon receiving request 56, can send response 58 to microservice2 12 with data (e.g., request for bill of materials, request for assembly instructions, request for export of data from a drawing database, etc.).

As above in FIGS. 5A and 5B, the SCPM 20 can be used to maintain a session hosted on the application service 14 in an active state to prevent a timeout and premature termination of the session. If the session is not maintained, further processing is required to re-establish a session id through further authentication of credentials. Maintaining the session eliminates unnecessary re-creation of a session id and unnecessary authentical of credentials in the case of a microservice that already has had its credentials authenticated. In such embodiments, the SCPM 20 can send a request 46 for the purpose of maintaining the session with the application server 14. The SCPM 20 can retain the session id that was received in response 45 from the application server 14 and sent in response 25 to any of the microservice1 through microserviceN. The request 46 can include the session id. The request 46 can include any variety of command/query/post/etc. useful to maintain the session without disturbing the use of the session between any of the microservice1 through microserviceN and application server 14. In some embodiments, the SCPM 20 may monitor network traffic and, when needed to maintain the session, send the request 46 for that purpose if a request 34 has not been detected within a preset time interval. The request 46 can, therefore, be asynchronous.

FIG. 7B depicts a simplified schematic flow diagram related to the embodiments depicted in FIGS. 2 and 6. FIG. 7B depicts another embodiment of a flow of actions as time progresses from top to bottom in the figure. Although FIG. 6 depicted request 16 and response 25 related only to microservice 12b, FIG. 7B depicts a flow diagram as it relates to different microservices that are incrementally labelled as microservice1 to microserviceN, with N being the number of microservices capable of using a common session on the application server 14. FIG. 7B is, therefore, a more generalized version of the embodiment depicted in FIG. 6, since the present disclosure is applicable to any number of microservices 12 requesting use of application service 14 via SCPM 20. The description of FIG. 7B will therefore begin at the trigger 32 which depicts a trigger 32 representative of all microservices 12. It will be appreciated, however, that some embodiments may include receiving a trigger 32 at different times for different microservices 12. FIG. 7B, in this regard, is a narrower depiction of possible variation of the time of arrival of the trigger 32. As suggested elsewhere in the present disclosure, the information system 10, such as via an orchestrator, may trigger each of the microservices at different times based upon different criteria.

FIG. 7B differs from FIG. 7A in that the microservices 12 take the form of microservices related to a drawing issue (referred to in the figure using reference numeral 12A) in the top portion of the figure. It is contemplated that the drawing issue system 12A can represent an application having one or more microservices 12 that are individually configured to request one or more web services from the application server 14. The drawing issue system 12A can represent a system in which the user 26, through the user action 30, requests information related to one or more aspects of requesting drawings from a drawing database, checking in updated drawings to the drawing database, requesting the creation of new drawings in the drawing database, or exporting drawings from the drawing database (e.g., via email, ftp, etc.). The drawing issue system 12A is configured to communicate, through the SCPM 20, to a Product Lifecycle Management (PLM) system (referred to in the figure using reference numeral 14A) configured to manage a product and its associated data through one or more stages of the product lifecycle. It is contemplated that the PLM system 14A operates as the application server 14 and is configured to respond to requests from the drawing issue system 12A with appropriate web services. In one embodiment, the PLM system 14A is in the form of Teamcenter, but other PLM systems are also contemplated.

Microservice1 12, upon receiving the trigger 32 from the user interface 28 to initiate a drawing issuance, can initiate the request 16 with the SCPM 20. The SCPM 20 authenticates at flow step 40 (discussed further above) the microservice1 12 and then communicates with the PLM system 14A via request 42 for the creation of a session in preparation for further web services request. The request 42 can include a credential associated with the request for web services received by the SCPM 20 from the microservice (discussed further above). The PLM system 14A, upon receiving the request 42 and authenticating the credential sent with the request 42, can initiate the creation at flow step 44 of a session such as, but not limited to, allocating memory and loading libraries. The PLM system 14A will also generate the session id. After creation of the session id, the PLM system 14A can send a response 45 to the SCPM 20 with the application id. Upon receiving the session id from the PLM system 14A, the SCPM 20 can send the response 25 to the microservice1 12. When the session id is returned to the microservice1 12 from the SCPM 20 as response 25, the microservice1 12 can thereafter send a request 34 using web services to the PLM system 14A, where the request 34 will include the session id. In some forms, as suggested above, the response 25 may additionally include data.

The request 34 illustrated in FIG. 7B includes the transmission of drawing details. The request 34 can take on other forms, including a request for data from the application server 14 to the extent that the original request 16 did or did not include a request for data. Upon receiving the request 34 with session id, the PLM system 14A can send a response 36 back to the microservice1 12 which includes the session id and the requested data.

When microservice1 12 has determined it no longer requires use of the session at the application server 14 (e.g., it has already transmitted the drawing details), the microservice1 12 can send a request 50 to free up the session (referred to above as terminating the session for the particular microservice using the session) to the SCPM 20. The SCPM 20, upon receiving the request 50 to free up the session from microservice1 12, can thereafter authenticate, at flow step 52, the credentials of microservice2 12 prior to sending a response 54 to microservice2 12 with the session id. Although FIG. 7B depicts the SCPM 20 authenticating credentials for microservice2 12 after the request 50 to free up the session for microservice1 12, it will be appreciated that the SCPM 20 may authenticate microservice2 12 at other times. In fact, the SCPM 20 can authenticate any of microservices1 - microservicesN at any time in the flow diagram. After microservice2 12 receives the session id in the response 54 from SCPM 20, microservice2 12 sends request 56 to the application server 14 with the session id. The request 56 can include a request to send a .pdf of th drawing to an external system (e.g.,, via email, ftp, etc.). Other forms of the request of 56 are also contemplated, similar to the other forms of request 34. The PLM system 14A, upon receiving request 56, can send response 58 to microservice2 12 with data.

As above in FIGS. 5A and 5B, the SCPM 20 can be used to maintain a session hosted on the PLM system 14A in an active state to prevent a timeout and premature termination of the session. In such embodiments, the SCPM 20 can send a request 46 for the purpose of maintaining the session with the PLM system 14A. The SCPM 20 can retain the session id that was received in response 45 from the application server 14 and sent in response 25 to any of the microservice1 through microserviceN. The request 46 can include the session id. The request 46 can include any variety of command/query/post/etc. useful to maintain the session without disturbing the use of the session between any of the microservice1 through microserviceN and application server 14. In some embodiments, the SCPM 20 may monitor network traffic and, when needed to maintain the session, send the request 46 for that purpose if a request 34 has not been detected within a preset time interval. The request 46 can, therefore, be asynchronous.

Any of the embodiments of information system 10 can be implemented in a distributed computing environment in which the microservices and application servers exist on different physical machines. In some embodiments, the components of the information system 10 can be hosted on one or more cloud computing services or a hybrid cloud/local computing system.

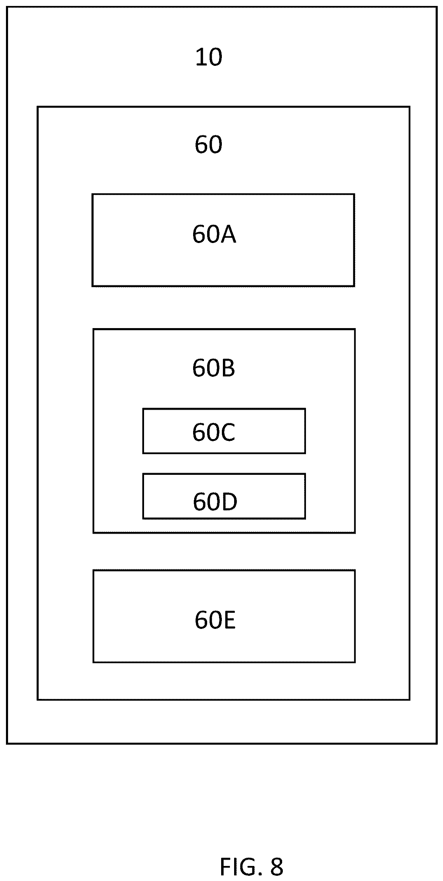

Turning now to FIG. 8, one or more portions of the information system 10 can be implemented using a computing device 60, one embodiment of which is illustrated in FIG. 5. The computing device(s) 60 can include one or more processor(s) 60A and one or more memory device(s) 60B. The one or more processor(s) 60A can include any suitable processing device, such as a microprocessor, microcontroller, integrated circuit, logic device, and/or other suitable processing device. The one or more memory device(s) 60B can include one or more computer-readable media, including, but not limited to, non-transitory computer-readable media, RAM, ROM, hard drives, flash drives, and/or other memory devices.

The one or more memory device(s) 60B can store information accessible by the one or more processor(s) 60A, including computer-readable instructions 60C that can be executed by the one or more processor(s) 60A. The instructions 60C can be any set of instructions that when executed by the one or more processor(s) 60A, cause the one or more processor(s) 60A to perform operations. In some embodiments, the instructions 60C can be executed by the one or more processor(s) 60A to cause the one or more processor(s) 60A to perform operations, such as any of the operations and functions for which the information system and/or the computing device(s) 60 are configured. The instructions 60C can be software written in any suitable programming language or can be implemented in hardware. Additionally, and/or alternatively, the instructions 60C can be executed in logically and/or virtually separate threads on the one or more processor(s) 60A. The one or more memory device(s) 60B can further store data 60D that can be accessed by the one or more processor(s) 60A. For example, the data 60D can include the session id, whitelist 22, credentials 24, etc.

The computing device(s) 60 can also include a network interface 60E used to communicate, for example, with the other components of the systems described herein (e.g., via a communication network). The network interface 60E can include any suitable components for interfacing with one or more network(s), including for example, transmitters, receivers, ports, controllers, antennas, and/or other suitable components. One or more devices can be configured to receive one or more commands from the computing device(s) 60 or provide one or more commands to the computing device(s) 60.

The network interface 60E can include any suitable components for interfacing with one or more network(s), including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

FIG. 8 discloses a method 62 for operating the information system 10 of the present disclosure. The method 62 includes, at step 64, receiving, by a SCPM 20, a request from a first microservice 12 for a web services connection to communicate with an application server 14. The method 62 also includes, at step 66, requesting, by the SCPM 20, the creation of a web services session from an application server 14. At step 68, the method 62 also includes receiving, by the SCPM 20, a session identification from the application server 14. At step 70, the method 62 includes sending the session identification to the first microservice 12 in response to the request for a web services connection. At step 72, the method 62 sets forth that after receiving a free up request 50 from the first microservice, sending the session identification to a second microservice in response to a request for a web services connection from the second microservice.

The method 62 can include additional steps beyond those depicted in FIG. 8. In one embodiment, the method 62 can also include authenticating, by the SCPM 20, a credential received from the microservice 12 against a whitelist 22 (e.g., a preconfigured list of authentic(verified) services) of authorized microservices 12. Alternatively and/or additionally, the method 62 can include sending, from the SCPM 20, the login identification and password 24 to the application server. Alternatively and/or additionally, the method 62 can include receiving, by the SCPM 20, a session termination 50 from the microservice.

Alternatively and/or additionally, the method 62 can include, in response to receiving the session termination 50, sending, by the SCPM 20, the session identification to a second microservice 12. Alternatively and/or additionally, the method 62 can include wherein the at least one processor 60A is configured to execute the machine-readable instructions to further cause the information processing apparatus 10 to send by the second microservice 12, a second web services request to the application server 14, the second web services request including the session identification. Alternatively and/or additionally, the method 62 can include, as a result of a second web services request being sent, the at least one processor 60A is configured to execute the machine-readable instructions to further cause the information processing apparatus 10 to return, by the application server 14, a response data to the second microservice 12. Alternatively and/or additionally, the method 62 can include communicating, by the SCPM 20, a connection refresh 46 to prevent a timeout of a session created by the application server 14. Alternatively and/or additionally, the method 62 can include sending, by the microservice 12, a web services request 34 to the application server 14, the web services request including the session identification. Alternatively and/or additionally, the method 62 can include returning, from the application server 14, a web services response to the microservice 12, the web services response including a data.

A technical benefit of the information system 10 is a more efficient handling of login credentials and session id between a microservice 12 and an application server 14. By authenticating the microservices 12 at the SCPM 20 instead of the application server, substantial time savings can be realized between the embodiments of the present disclosure and the prior art depicted in FIG. 1. In one form, the time taken using embodiments of the present disclosure between requesting a web services connection from a microservice to an application server, and receiving a reply, is between 1-2 seconds. The time taken in prior art systems such as in FIG. 1 between requesting a web services connection from a microservice to an application server, and receiving a reply, is between 30-40 seconds. In other words, in those embodiments in which the application server handles all requests from microservices without use of an SCPM, all handling of login credentials and session id management are performed by the application server. Using the SCPM as set forth in the instant disclosure, approximately 2500 hours of increased productivity can be realized if the SCPM handles login credentials and management of session id.

Further aspects are provided by the subject matter of the following clauses:
A session management method, comprising receiving, by a smart connection pool manager (SCPM), a request from a first microservice for a web services connection to communicate with an application server, requesting, by the SCPM, a creation of a web services session from an application server, receiving, by the SCPM, a session identification from the application server, sending the session identification to the first microservice in response to the request for a web services connection, and after receiving a free up request from the first microservice, sending the session identification to a second microservice in response to a request for a web services connection from the second microservice.

The session management method of the preceding clause, wherein the request from the first microservice includes a credential associated with the first microservice, and which further includes authenticating the credential of the first microservice against a whitelist of approved microservices.

The session management method of any preceding clause, wherein the SCPM includes a login identification and password associated with the first microservice for access to the application server.

The session management method of any preceding clause, which further includes sending, from the SCPM, the login identification and password to the application server.

The session management method of any preceding clause, which further includes communicating, by the SCPM, a connection refresh to prevent a timeout of a session created by the application server.

The session management method of any preceding clause, which further includes sending, by the first microservice, a web services request to the application server, the web services request including the session identification.

The session management method of any preceding clause, which further includes returning, from the application server, a web services response to the first microservice, the web services response including a data.

The session management method of any preceding clause, which further includes receiving, by the SCPM, a request from the second microservice for a web services connection to communicate with an application server.

The session management method of any preceding clause, wherein the request from the second microservice includes a credential associated with the second microservice, and which further includes authenticating the credential of the second microservice against a whitelist of approved microservices.

The session management method of any preceding clause, which further includes sending, by the second microservice, a web services request to the application server, the web services request including the session identification

A session management apparatus, comprising: at least one memory configured to store machine-readable instructions, and at least one processor configured to execute the machine-readable instructions to cause the information processing apparatus to: receive, by a smart connection pool manager (SCPM), a request from a first microservice for a web services connection to communicate with an application server, request by the SCPM, a creation of a web services session from an application server, receive, by the SCPM, a session identification from the application server, send the session identification to the first microservice in response to the request for a web services connection, and after receipt of a free up request from the first microservice, send the session identification to a second microservice in response to a request for a web services connection from the second microservice.

The session management apparatus of the preceding clause, wherein the request from the first microservice including a credential associated with the first microservice, and which further includes authenticating the credential of the first microservice against a whitelist of approved microservices.

The session management apparatus of any preceding clause, wherein the SCPM includes a login identification and password associated with the first microservice for access to the application server.

The session management apparatus of any preceding clause, wherein the at least one processor is configured to execute the machine-readable instructions to further cause the information processing apparatus to receive, by the SCPM, a session termination from the first microservice.

The session management apparatus of any preceding clause, wherein in response to a reception of the session termination, the at least one processor is configured to execute the machine-readable instructions to further cause the information processing apparatus to send, by the SCPM, the session identification to a second microservice.

The session management apparatus of any preceding clause, wherein the at least one processor is configured to execute the machine-readable instructions to further cause the information processing apparatus to send by the second microservice, a second web services request to the application server, the second web services request including the session identification.

The session management apparatus of any preceding clause, wherein, as a result of the second web services request being sent, the at least one processor is configured to execute the machine-readable instructions to further cause the information processing apparatus to return, by the application server, a response data to the second microservice.

The session management apparatus of any preceding clause, which further includes communicating, by the SCPM, a connection refresh to prevent a timeout of a session created by the application server.

A computer program product, the computer program product being embodied in a non-transitory computer readable storage medium and comprising computer instructions for: receiving, by a smart connection pool manager (SCPM), a request from a first microservice for a web services connection to communicate with an application server, requesting, by the SCPM, a creation of a web services session from an application server, receiving, by the SCPM, a session identification from the application server, sending the session identification to the first microservice in response to the request for a web services connection, and after receiving a free up request from the first microservice, sending the session identification to a second microservice in response to a request for a web services connection from the second microservice.

The computer program product of the preceding clause, which further includes authenticating, by the SCPM, a credential received from the first microservice against a whitelist of authorized microservices.

The computer program product of any preceding clause, which further includes sending, from the SCPM, a login identification and a password to the application server.

The computer program product of any preceding clause, which further includes receiving, by the SCPM, a session termination from the first microservice.

The computer program product of any preceding clause, wherein in response to receiving the session termination, sending, by the SCPM, the session identification to a second microservice.

The computer program product of any preceding clause, which further includes sending, by the second microservice, a second web services request to the application server, the second web services request including the session identification.
Clause 1: A session management method, comprising:
   receiving, by a smart connection pool manager (SCPM), a request from a first microservice for a web services connection to communicate with an application server;
   requesting, by the SCPM, a creation of a web services session from an application server;
   receiving, by the SCPM, a session identification from the application server;
   sending the session identification to the first microservice in response to the request for a web services connection; and
   after receiving a free up request from the first microservice, sending the session identification to a second microservice in response to a request for a web services connection from the second microservice.
Clause 2: The session management method of any preceding clause, wherein the request from the first microservice includes a credential associated with the first microservice, and which further includes authenticating the credential of the first microservice against a whitelist of approved microservices.
Clause 3 : The session management method of any preceding clause, wherein the SCPM includes a login identification and password associated with the first microservice for access to the application server.
Clause 4: The session management method of any preceding clause, which further includes sending, from the SCPM, the login identification and password to the application server.
Clause 5: The session management method of any preceding clause, which further includes communicating, by the SCPM, a connection refresh to prevent a timeout of a session created by the application server.
Clause 6: The session management method of any preceding clause, which further includes sending, by the first microservice, a web services request to the application server, the web services request including the session identification. Clause 7: The session management method of any preceding clause, which further includes returning, from the application server, a web services response to the first microservice, the web services response including a data.
Clause 8: A session management apparatus, comprising:
   at least one memory configured to store machine-readable instructions; and
   at least one processor configured to execute the machine-readable instructions to cause the information processing apparatus to:
      receive, by a smart connection pool manager (SCPM), a request from a first microservice for a web services connection to communicate with an application server;
      request by the SCPM, a creation of a web services session from an application server;
      receive, by the SCPM, a session identification from the application server;
      send the session identification to the first microservice in response to the request for a web services connection; and
      after receipt of a free up request from the first microservice, send the session identification to a second microservice in response to a request for a web services connection from the second microservice.
Clause 9: The session management apparatus of any preceding clause, wherein the request from the first microservice including a credential associated with the first microservice, and which further includes authenticating the credential of the first microservice against a whitelist of approved microservices.
Clause 10: The session management apparatus of any preceding clause, wherein the SCPM includes a login identification and password associated with the first microservice for access to the application server.
Clause 11: The session management apparatus of any preceding clause, wherein the at least one processor is configured to execute the machine-readable instructions to further cause the information processing apparatus to receive, by the SCPM, a session termination from the microservice.
Clause 12: The session management apparatus of any preceding clause, wherein in response to a reception of the session termination, the at least one processor is configured to execute the machine-readable instructions to further cause the information processing apparatus to send, by the SCPM, the session identification to a second microservice.
Clause 13: The session management apparatus of any preceding clause, wherein the at least one processor is configured to execute the machine-readable instructions to further cause the information processing apparatus to send by the second microservice, a second web services request to the application server, the second web services request including the session identification.
Cluse 14: The session management apparatus of any preceding clause, wherein, as a result of the second web services request being sent, the at least one processor is configured to execute the machine-readable instructions to further cause the information processing apparatus to return, by the application server, a response data to the second microservice.
Clause 15: A computer program product, the computer program product being embodied in a non-transitory computer readable storage medium and comprising computer instructions for:
   receiving, by a smart connection pool manager (SCPM), a request from a first microservice for a web services connection to communicate with an application server;
   requesting, by the SCPM, a creation of a web services session from an application server;
   receiving, by the SCPM, a session identification from the application server;
   sending the session identification to the first microservice in response to the request for a web services connection; and
   after receiving a free up request from the first microservice, sending the session identification to a second microservice in response to a request for a web services connection from the second microservice.
Clause 16 The computer program product of any preceding clause, which further includes authenticating, by the SCPM, a credential received from the microservice against a whitelist of authorized microservices.
Clause 17: The computer program product of any preceding clause, which further includes sending, from the SCPM, a login identification and a password to the application server.
Clause 18: The computer program product of any preceding clause, which further includes receiving, by the SCPM, a session termination from the microservice.
Clause 19: The computer program product of any preceding clause, wherein in response to receiving the session termination, sending, by the SCPM, the session identification to a second microservice.
Clause 20: The computer program product of any preceding clause, which further includes sending, by the second microservice, a second web services request to the application server, the second web services request including the session identification.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An information processing method, comprising:
receiving, by a smart connection pool manager (SCPM) (20), a request from a microservice (12) for a web services connection to communicate with an application server (14);
requesting, by the SCPM (20), a creation of a web services session from an application server (14);
receiving, by the SCPM (20), a session identification from the application server (14); and
sending the session identification to the microservice (12) in response to the request for a web services connection.

2. The information processing method of claim 1, wherein the request from the microservice (12) includes a credential associated with the microservice (12), and which further includes authenticating the credential of the microservice (12) against a whitelist (22) of approved microservices.

3. The information processing method of any preceding claim, wherein the SCPM (20) includes a login identification and password (24) associated with the microservice (12) for access to the application server (14).

4. The information processing method of claim 4, which further includes sending, from the SCPM (20), the login identification and password (24) to the application server (14).

5. The information processing method of any preceding claim, which further includes communicating, by the SCPM (20), a connection refresh (46) to prevent a timeout of a session created by the application server (14).

6. The information processing method of any preceding claim, which further includes sending, by the microservice (12), a web services request (34) to the application server (14), the web services request (34) including the session identification.

7. The information processing method of any preceding claim, which further includes returning, from the application server (14), a web services response to the microservice (12), the web services response including a data.

8. An information processing apparatus (10), comprising:
at least one memory configured to store machine-readable instructions; and
at least one processor (60A) configured to execute the machine-readable instructions to cause the information processing apparatus (10) to:
receive, by a smart connection pool manager (SCPM) (20), a request from a microservice (12) for a web services connection to communicate with an application server (14);
request by the SCPM (20), a creation of a web services session from an application server (14);
receive, by the SCPM (20), a session identification from the application server (14); and
send the session identification to the microservice (12) in response to the request for a web services connection.

9. The information processing apparatus (10) of claim 8, wherein the request from the microservice (12) including a credential associated with the microservice (12), and which further includes authenticating the credential of the microservice (12) against a whitelist (22) of approved microservices.

10. The information processing apparatus (10) of any one of claims 8-9, wherein the SCPM (20) includes a login identification and password (24) associated with the microservice (12) for access to the application server (14).

11. The information processing apparatus (10) of any one of claims 8-10, wherein the at least one processor (60A) is configured to execute the machine-readable instructions to further cause the information processing apparatus (10) to receive, by the SCPM (20), a session termination (50) from the microservice (12).

12. The information processing apparatus (10) of claim 11, wherein in response to a reception of the session termination (50), the at least one processor (60A) is configured to execute the machine-readable instructions to further cause the information processing apparatus (10) to send, by the SCPM (20), the session identification to a second microservice (12).

13. The information processing apparatus (10) of claim 12, wherein the at least one processor (60A) is configured to execute the machine-readable instructions to further cause the information processing apparatus (10) to send by the second microservice (12), a second web services request (34) to the application server (14), the second web services request (34) including the session identification.

14. The information processing apparatus (10) of claim 13, wherein, as a result of the second web services request (34) being sent, the at least one processor (60A) is configured to execute the machine-readable instructions to further cause the information processing apparatus (10) to return, by the application server (14), a response data to the second microservice (12).

15. The information processing apparatus (10) of claim 14, which further includes communicating, by the SCPM (20), a connection refresh (46) to prevent a timeout of a session created by the application server (14).
